# EUROPEAN PATENT SPECIFICATION

(11) **EP 3 275 551 B1**
(45) Date of publication and mention of the grant of the patent: **21.08.2019**
(21) Application number: 15886154.2
(22) Date of filing: 25.03.2015
(51) Int. Cl.: B02C 23/10, B02C 4/08, B02C 4/32, B02C 21/02, B03B 9/06

(54) **MACHINE FOR RECYCLING LAMINATED PLASTERBOARD, SEPARATION METHOD PERFORMED BY SAID MACHINE AND USE OF SAME**
MASCHINE ZUM RECYCLING VON LAMINIERTER GIPSKARTONPLATTE, VON DER BESAGTEN MASCHINE DURCHGEFÜHRTES TRENNVERFAHREN UND VERWENDUNG DAVON
MACHINE POUR LE RECYCLAGE DE PLAQUES DE GYPSE LAMINÉ, PROCÉDÉ DE SÉPARATION RÉALISÉ PAR CETTE MACHINE ET UTILISATION DE CELLE-CI

(30) Priority: 24.03.2015 ES 201530387
(43) Date of publication of application: 31.01.2018
(73) Proprietor: Knauf GmbH Sucursal En España, 28050 Madrid (ES)
(72) Inventor: FERNÁNDEZ CASADO, Sergio, 28050 Madrid (ES)
(74) Representative: Gil-Vega, Victor
(86) International application number: PCT/ES2015/070218
(87) International publication number: WO 2016/151153

(56) References cited:
- WO-A1-2004/016355
- JP-A- H06 277 537
- JP-A- 2000 084 424
- JP-A- 2000 225 354
- JP-A- 2001 137 726
- JP-A- 2001 137 726
- JP-A- 2002 159 957
- JP-A- 2008 043 936
- US-A- 6 164 572
- US-B1- 6 295 794
- DATABASE WPI Week 201213, 09 February 2012 Derwent Publications Ltd., London, GB; Class J01, AN 2012-B81392 & JP 2012 024690 A (HOSODA MINORU) 09 February 2012

## Description

The present invention relates to a machine for the separation and recycling of laminated plasterboard, based on their crushing and subsequent automatic sorting, specifically to facilitate the on-site recycling of laminated plasterboard at the work site, which, owing to its portable nature and reduced size, allows the on-site recycling of the laminated plasterboard on the construction site. Such the machine is known for example from JP2002159957.

Other objects of the invention include a separation procedure carried out by the machine and its use to facilitate the on-site recycling of laminated plasterboard on the construction site.

Thus, the machine according to the invention, on the one hand, facilitates the recycling of the laminated plasterboard, even in the case of those works of a modest size where no sufficient space is available for a waste storage area and, on the other hand, avoids the need to carry over long distances for recycling purposes of the waste left by the laminated plasterboard, which mainly consists of cardboard and plaster.

Laminated plasterboard (LPB), also known in the art as gypsum board, are an increasingly used construction material and generally comprise of an inner layer of laminated gypsum sandwiched between two layers of cardboard, its essential components being gypsum and cellulose.

Currently, as a consequence of environmental concerns, the need for recycling materials has raised a growing interest, which has led the European Union to adopt a framework directive on waste (Directive 2008/98/EC) to establish the priority order of the waste hierarchy to be applied at member states level.

Similarly, Directive 2008/98/EC also establishes that by 2020, the preparing for re-use, recycling and other material recovery of non-hazardous Construction and Demolition Waste (CDW) shall be increased to a minimum of 70 % by weight.

Thus, the recycling of gypsum waste prevents the exhaustion of gypsum as raw material and preserves the landscape, simultaneously reducing the mining of rock from the quarry and the percentage of waste disposal on landfills.

According to Eurogypsum (Association of European Manufacturers of Gypsum Products), assuming a recycling rate of 80%, the amount of recycled gypsum available in Europe would be around 2.5-3.0 tons, which is equivalent to 20% of the raw material required by the plasterboard industry at European level.

Models currently applied to the laminated plasterboard recycling management involve the use of large mobile recycling machines on board of high tonnage lorries, or the use of recycling plants strategically located in the vicinity of large waste-generating urban areas. In both cases, the expenses associated to the transportation of the heavy machinery required or the transportation of waste to the recycling plants are very high, which frequently entails the disposal of this kind of waste on landfills.

Furthermore, the use of large mobile recycling machines is limited, as a result of their large size and their high rejection rates. In fact, for instance, in Spain, waste materials from laminated plasterboard are not usually recycled on site.

Large global manufacturers of laminated plasterboard have implemented recycling systems; however, these systems are usually installed at the production plants, and their use involves (depending on the desired rejection rate) several milling, crushing, sorting, etc. stages.

For instance, in Canada, several management policies are being implemented since the 1980s, in connection with the recycling of laminated plasterboard through different programs. One of the companies specialised in the recycling of laminated plasterboard is the Canadian company New West Gypsum Recycling, which has designed a program for the construction of recycling centres that may process, on an annual basis, some 250,000 tonnes of gypsum, which is approximately the amount of gypsum required to produce almost thirty million square meters of laminated plasterboard. Although this figure only represents 6% of the total amount of gypsum plasterboards sold every year in the Canadian construction market, it is part of a project which manages to recover waste and recover it for the manufacture of laminated plasterboard, reducing the financial and environmental charges and avoiding, to a certain extent, the consumption of natural resources (Wrap, 2008).

In the light of the above, it is necessary to put forward new models and new solutions for the recycling of laminated plasterboard that do not penalize the impact on management systems, that are burdened, both from an environmental and financial point of view, by the transportation to landfills or other waste transfer stations.

Among the most widely known solutions, in European patent publication EP0606338, for instance, it is disclosed the use of a machine for the recycling of gypsum wall panels, basically comprising a horizontally positioned cylindrical container which exhibits a product feed chute and a product exit chute, a driveable shaft which is attached to the front walls, tools mounted on the shaft, that are radially directed away from the shaft, whereby the shaft is operated in the Froude number range ≥ 7, for the processing, following a coarse pre-pulverization, of waste material resulting from the production of gypsum plaster boards.

EP1421995, "Recycling apparatus for gypsum plasterboards", relates to an apparatus for recycling of materials comprising a hydraulic binder, in particular gypsum, wherein the apparatus comprises a hopper arranged in connection with means for providing a coarse crushing of materials introduced in the hopper, and where the means for coarse crushing is in connection with a first conveying means, which conveys the coarse crushed material to an inlet opening for a roller mill device where the coarse crushed material is rolled, after which a second conveyor means conveys the material to a separating device comprising a perforated separating drum where the perforations allow the crushed and milled fine particles to pass through the perforations and be collected in a third conveyor means for reuse or alternatively storage, and where the material left in the drum is removed for storage or disposal, by means of a fourth conveyor means.

The object of the present invention is to provide a new system for the recycling of laminated plasterboard, allowing the on-site recycling at any construction site or facilities, without limitation as to the size, providing a portable small-sized machine for the recycling of laminated plasterboard. The advantages of such a recycling machine basically lie on the fact that, on the one hand, and as far as the technical solution is concerned, the machine can be taken to practically any site, so that new recycled materials that can be reused can be obtained on-site; on the other hand, from a financial point of view, waste management expenses (landfill disposal,...) are avoided; and finally, form an environmental point of view, this waste does not end its life cycle in a landfill nor increases the gypsum fraction present in the recycled aggregates.

For that purpose, the machine for the recycling of laminated plasterboard according to the invention is defined in the appended claims 1-8. Accordingly the machine (hereinafter, the machine according to the invention) has been designed around a framework which supports, in a first vertical level, a pressure-actuated feeding-crushing element and a cleaning element and, in a second level, located downstream the first level, a collecting and sorting element.

Essentially, the feeding-crushing element comprises one or more sets of metal rollers rotating in opposite directions about their longitudinal axes and which serve, on the one hand, to feed the machine when a laminated plasterboard (hereinafter, LPB) is inserted between them, thanks to the dragging effect generated by the counter-rotation of the rollers, and on the other part, as a crushing element, by applying a vertical compression on both surfaces of the LPB fed. At the outlet of this group of rollers, a steel wire fixed to the framework is longitudinally arranged, which helps to separate each one of the cardboard elements that comprise the surfaces of the LPB. In association with this feeding-crushing element, a second group comprised by two rollers incorporating milling or brushing elements which rotate in opposite directions cleans the eventual gypsum remains fixed to the inner sides of the cardboard elements. The cleaning element is comprised by the above-mentioned steel wire and the second group of rollers incorporating milling or brushing elements. On a second, downstream level, the collecting and sorting element comprises a worm screw fully or partially housed within a perforated casing or, alternatively, two worm screws that travel in opposite relative directions, so that the gypsum passes through the holes of the casing, due to gravity, and can be collected. On the other hand, larger-sized cardboard pieces are trapped in the travel of the worm screw and are carried by this latter towards one of the sides of the machine, where they can be collected.

The object of the invention will be described in more detail below, on the basis of embodiments of such invention and referring to the attached figures, wherein:
- Fig. 1:: is a rear perspective view of an embodiment of the machine according to the invention;
- Fig. 2:: is a top view of an embodiment of the machine according to the invention;
- Fig. 3:: is a schematic view of the machine according to the invention in operation.

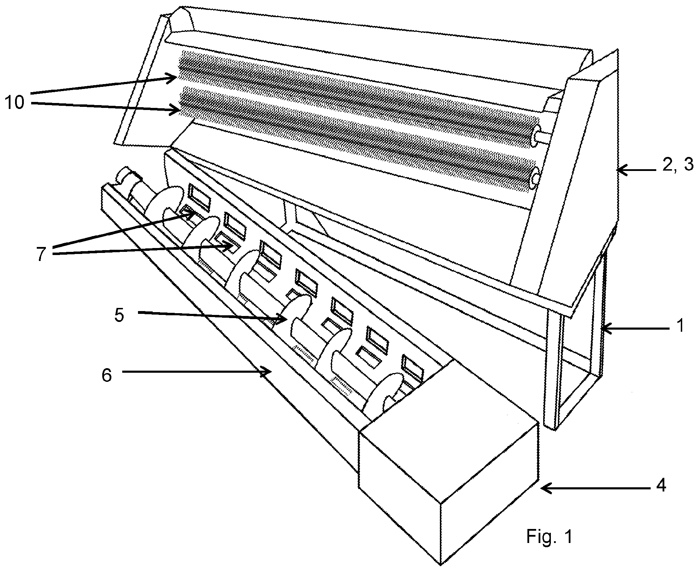

Referring to figure 1, which schematically shows an embodiment of the machine, seen from the LPB material outlet area, the machine according to the invention is based on a framework (1) which supports, in a first vertical level, a pressure-actuated feeding-crushing element (2) and a cleaning element (3) and, in a second level, located downstream the first level, a collecting and sorting element (4).

As it can be appreciated in this figure, the collecting and sorting element (4) is inclined downwards forming an angle to the floor, to facilitate the separation of the gypsum and cardboard elements as a result of their difference in size, allowing the cardboard to be subsequently carried towards one of the sides of the collecting and sorting element.

The collecting and sorting element (4) comprises a worm screw (5) fully or, in another embodiment, partly housed inside a perforated casing (6), so that the gypsum may pass through the holes (7) of the casing by the effect of gravity, falling towards the outside of the machine, where it can be collected. The movement of the worm screw (5) allows carrying the larger cardboard items towards one side of the casing (6), coinciding with the uppermost part of such casing, wherefrom it is discharged outside the machine. In an embodiment, the size of the worm screw (5) and the casing (6) allows that essentially the whole screw (5) is housed inside the casing (6). In another embodiment, the size of the worm screw (5) and the casing (6) allow the casing (6) to partially house the screw (5). The worm screw (5) is coupled to a corresponding motor which is located, for instance at one of the side ends of the casing (6).

However, although the in embodiment shown the casing (6) is based on an open rectangular box, containing two side walls and a rear wall, there are no limitations as to its shape, which can be also in the shape of a trapezoid, a triangle, etc. Similarly, "a worm screw" should not be understood as being limited to a single worm screw, but it may also refer to a group of two worm screws that carry the material in opposite directions.

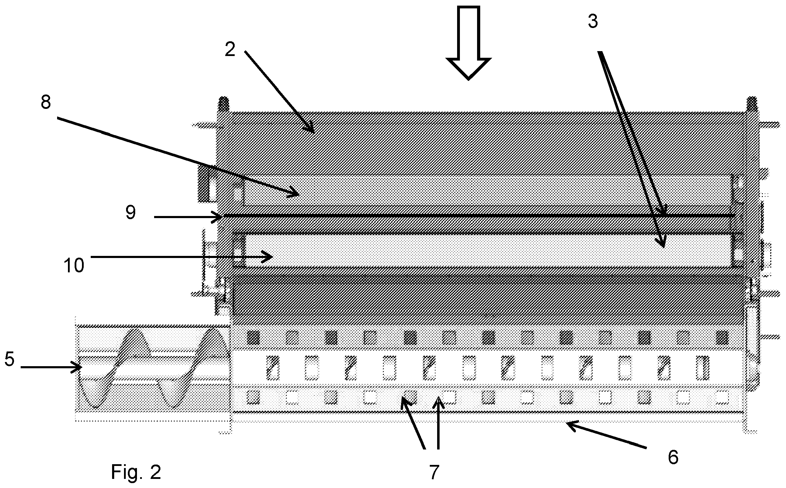

Optionally, the casing (6) which houses the worm screw (5) may include a lid for safety reasons, for instance, as shown in figure 2. Similarly, the holes (7) may adopt any shape as appropriate, and may consist of square or rectangular slots, eyelets or similar.

The holes (7) of the casing (6) are preferably located in, at least, a side wall and at least a rear wall of the casing, preferably keeping the front side(s) of the casing free from any hole, for safety reasons (refer also to figure 2).

Referring now to figure 2, the feeding-crushing element (2) consists of a group of at least two metallic rollers (8) arranged parallel and vertically one on top of the other in such a way that between them there is enough room for the feeding of a
LPB panel.

In order to feed the machine with any kind of LPB, appropriate means have been arranged to adjust the separation between the rollers (8), allowing such rollers to move away from or approach each other, located, for instance in the area where the rotating shaft of the rollers (8) is connected to the frame (1).

These rollers (8) rotate in opposite directions about their respective longitudinal axes, by means of a motor which is coupled to the relevant transmission mechanisms.

The rollers (8), on the one hand, are used to feed the machine when a LPB is introduced between them, thanks to the dragging effect generated by their counter-rotation and, on the other hand, they are also used as a crushing element, exercising a vertical compression force on both surfaces of the LPB fed.

A wire (9), for instance, a steel wire, is longitudinally arranged behind these rollers (8), approximately at the height of the central area of the space left between the rollers (8). this wire (9) is firmly attached to the frame (1) under tension, so that such tension is maintained during the operation of the machine. The wire (9) is used to separate each one of the cardboard pieces comprising the surfaces of the LPB.

As it can be observed in figures 1 and 2, cooperating with this feeding-crushing element (2), the cleaning element (3) comprises a brushing means for the cleaning of the cardboard, consisting of a second group of rollers (10) essentially arranged parallel to the rollers (8) and vertically separated from each other, as shown in detail in figure 2, where the embodiment depicted includes two of these rollers (10). The rolling surfaces of such rollers of the brushing or cleaning means (10) comprise milling, brushing or polishing means, and rotate in opposite directions. The cleaning element (3) is comprised by the already mentioned wire (9) and the second group of rollers (10) that include milling or brushing means.

In the shown embodiment, the milling or brushing means are formed by bristles vertically arranged on the rolling surface of the rollers (10), although the invention is not limited any way to such means, since any other means may be arranged on the rollers (10), provided that they fulfil the function previously described. similarly, the arrangement of these milling, polishing or brushing means is not subject to any particular limitation, as such arrangement may be homogeneous, uniform, non-continuous, etc.

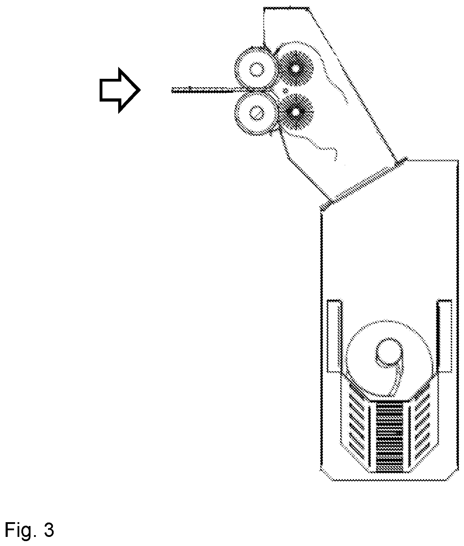

When in operation, according to an exemplary embodiment and referring to figure 3, the laminated plasterboard (LPB) is introduced in the machine according to the invention through the feeding-crushing element (2), where the rollers (8) compress the panel until it breaks. At the outlet side of these two rollers (8), the wire (9) helps to separate each one of the cardboard pieces that comprise the LPB (front and back). The rollers (10), which rotate in opposite directions, clean any gypsum remains eventually adhered to the inner sides of the cardboard items. Thus, all the material falls inside the collecting and sorting element (4), where the holes (7) of the casing (6) allow the gypsum to pass through them, so that it may be collected at the lower part of the machine, while the larger cardboard pieces that have remained in the casing are dragged by means of a worm screw system (5) and carried towards one of the sides of the casing (6), where they can be collected.

## Claims

1. Machine for the recycling of laminated plasterboard or LPB, built around a framework (1) which supports, in a first vertical level, a pressure-actuated feeding-crushing element (2) and a cleaning element (3) and, in a second level, located downstream the first level, a collecting and sorting element (4), where:
the feeding-crushing element (2) comprises a group of at least two metal rollers (8) vertically arranged in parallel one above the other, so that sufficient space is left for the feeding of a LPB panel between both rollers, that rotate in opposite directions about their respective longitudinal axes,
as well as brushing or cleaning means that comprise a set of rollers (10) essentially arranged parallel to the rollers (8) and also vertically separated from each other, the said rollers (10) rotating in opposite directions and the said rollers (10) including milling, brushing or polishing means along their rolling surface and **characterized in that**
the cleaning element (3) comprises a wire (9) longitudinally arranged behind the rollers (8), approximately at the height of the central area of the space left between the rollers (8), which is firmly attached to the framework (1) under tension,
the collecting and sorting element (4) comprises a worm screw (5) fully or partially housed within a perforated casing (6), or two worm screws that travel in opposite relative directions, so that the gypsum passes through the holes (7) of the casing towards the outside of the machine, due to gravity, while the cardboard is carried by the worm screw or worm screws (5) towards one of the sides of the casing (6).

2. Machine for the recycling of laminated plasterboard or LPB according to claim 1, **characterized in that** the collecting and sorting element (4) is inclined downwards forming an angle with the surface where the machine is resting.

3. Machine for the recycling of laminated plasterboard or LPB according to claim 1, **characterized in that** the movement of the worm screw (5) carries the cardboard towards one of the sides of the casing (6) which coincides with its uppermost section, and from this point, the cardboard is carried outside the machine.

4. Machine for the recycling of laminated plasterboard or LPB according to claim 1, **characterized in that** the holes (7) of the casing (6) are located at least on a side wall and at least on a rear wall of the casing.

5. Machine for the recycling of laminated plasterboard or LPB according to claim 1, **characterized in that** the milling, polishing or brushing means comprise bristles that are vertically arranged on the rolling surface of the cylinders (10).

6. Machine for the recycling of laminated plasterboard or LPB according to claim 1, **characterized in that** in order to feed the machine with any kind of LPB, a series of appropriate means are available to adjust the separation between the rollers (8) allowing the rollers (8) to come closer or to separate from each other.

7. Machine for the recycling of laminated plasterboard or LPB according to claim 1, **characterized in that** the rollers (8) rotate in opposite directions about their respective longitudinal axes by means of motors associated to driving mechanisms.

8. Machine for the recycling of laminated plasterboard or LPB according to claim 1, **characterized in that** the rollers (8) are used, on the one hand, to feed the machine when a LPB is introduced between them, as a result of the dragging effect generated by their counter-rotation and, on the other hand, as a crushing element, exercising a vertical compression force on both surfaces of the LPB fed.

9. Use of a machine according to any of the preceding claims for the on-site recycling of laminated plasterboard or LPB at the work site, allowing the recycling of the laminated plasterboard waste on the construction site.

10. Procedure for the separation into their individual components of laminated plasterboard or LPB through the use of a machine according to any one of claims 1 to 8, **characterized in that** it includes the stages of feeding the laminated plasterboard into the machine through the feeding-crushing element (2), such board being compressed by the rollers (8) until it breaks; separating by means of the steel wire (9) each one of the cardboard items that comprise the LPB; cleaning with the rollers (10), that rotate in opposite directions, the eventual gypsum that remains adhered to the internal sides of the cardboards, wherein all the material falls into the collecting and sorting element (4), where the holes of the casing (6) allow the gypsum to pass through to be collected at the lower part of the machine, while the cardboard is absorbed by the worm screw (5) and carried towards one of the sides of the casing (6), where they can be collected.

## Patentansprüche

1. Maschine zum Recycling von laminierter Gipskartonplatte oder LGK, die um einen Rahmen (1) gebaut ist, der
in einer ersten vertikalen Ebene, ein druckbetätigtes Zufuhr-Zerkleinerungs-Element (2) und ein Reinigungselement (3) und in einer zweiten Ebene, die der ersten Ebene nachgeschaltet angeordnet ist, ein Sammel- und Sortier-Element (4) stützt, wobei:
das Zufuhr-Zerkleinerungs-Element (2) eine Gruppe von mindestens zwei vertikal parallel übereinander angeordneten Metallwalzen (8) umfasst, sodass zwischen beiden Walzen genügend Raum für die Zuführung einer LGK-Platte gelassen wird, die sich in entgegengesetzte Richtung um ihre jeweilige Längsachse drehen,
sowie Bürst- oder Reinigungseinrichtungen, die einen Satz Walzen (10) umfassen, der im Wesentlichen parallel zu den Walzen (8) und auch vertikal voneinander getrennt angeordnet ist, wobei sich die Walzen (10) in entgegengesetzte Richtungen drehen und die Walzen (10) Fräs-, Bürst- oder Poliereinrichtungen entlang ihrer Walzfläche einschließen und **dadurch gekennzeichnet sind, dass**
das Reinigungselement (3) einen Draht (9) umfasst, der in Längsrichtung hinter den Walzen (8) angeordnet ist, etwa auf der Höhe des mittleren Bereichs des zwischen den Walzen (8) verbleibenden Raums, der unter Spannung fest mit dem Rahmen (1) verbunden ist,
wobei das Sammel- und Sortierelement (4) eine Schnecke (5), die ganz oder teilweise in einem perforierten Gehäuse (6) untergebracht ist, oder zwei Schnecken, die sich in entgegengesetzten relativen Richtungen bewegen, umfasst, sodass der Gips durch die Löcher (7) des Gehäuses aufgrund der Schwerkraft zur Außenseite der Maschine durchläuft, während der Karton von der Schnecke oder den Schnecken (5) zu einer der Seiten des Gehäuses (6) befördert wird.

2. Maschine zum Recycling von laminierter Gipskartonplatte oder LGK nach Anspruch 1, **dadurch gekennzeichnet, dass** das Sammel- und Sortierelement (4) unter Bildung eines Winkels mit der Fläche, auf der die Maschine liegt, nach unten geneigt ist.

3. Maschine zum Recycling von laminierter Gipskartonplatte oder LGK nach Anspruch 1, **dadurch gekennzeichnet, dass** die Bewegung der Schnecke (5) den Karton zu einer der Seiten des Gehäuses (6) befördert, die mit seinem obersten Abschnitt zusammenfällt, und dass von diesem Punkt an, der Karton außerhalb der Maschine befördert wird.

4. Maschine zum Recycling von laminierter Gipskartonplatte oder LGK nach Anspruch 1, **dadurch gekennzeichnet, dass** die Löcher (7) des Gehäuses (6) mindestens an einer Seitenwand und mindestens an einer Hinterwand des Gehäuses angeordnet sind.

5. Maschine zum Recycling von laminierter Gipskartonplatte oder LGK nach Anspruch 1, **dadurch gekennzeichnet, dass** Fräs-, Polier- oder Bürsteinrichtungen Borsten umfassen, die vertikal auf der Walzenfläche der Zylinder (10) angeordnet sind.

6. Maschine zum Recycling von laminierter Gipskartonplatte oder LGK nach Anspruch 1, **dadurch gekennzeichnet, dass**, um der Maschine jede Art von LGK zuzuführen, eine Reihe geeigneter Einrichtungen zur Verfügung stehen, um den Abstand zwischen den Walzen (8) einzustellen, um den Walzen (8) zu ermöglichen, einander näher zu kommen oder sich voneinander zu trennen.

7. Maschine zum Recycling von laminierter Gipskartonplatte oder LGK nach Anspruch 1, **dadurch gekennzeichnet, dass** sich die Walzen (8) mittels Motoren, die mit Antriebsmechanismen verbunden sind, in entgegengesetzten Richtungen um ihre jeweiligen Längsachsen drehen.

8. Maschine zum Recycling von laminierter Gipskartonplatte oder LGK nach Anspruch 1, **dadurch gekennzeichnet, dass** die Walzen (8) einerseits infolge der durch ihre Gegendrehung erzeugten Schleppwirkung zum Zuführen zu der Maschine, wenn eine LGK zwischen ihnen eingeführt wird, und andererseits als ein Zerkleinerungselement verwendet werden, indem sie eine vertikale Druckkraft auf beide Flächen der zugeführten LGK ausüben.

9. Verwendung einer Maschine nach einem der vorhergehenden Ansprüche zum Vor-Ort-Recycling von laminierter Gipskartonplatte oder LGK an dem Arbeitsort, wobei das Recycling der laminierten Gipskartonplattenabfälle auf der Baustelle ermöglicht wird.

10. Verfahren zur Trennung von laminierten Gipskartonplatten oder LGK in ihre Einzelkomponenten durch die Verwendung einer Maschine nach einem der Ansprüche 1 bis 8, **dadurch gekennzeichnet, dass** es die Stufen des Zuführens der Gipskartonplatte in die Maschine durch das Zufuhr-Zerkleinerungs-Element (2), wobei diese Platte durch die Walzen (8) zusammengedrückt wird bis sie bricht; des Trennens durch den Stahldraht (9) jedes der Kartonelemente, welche die LGK umfassen; des Reinigens mit den Walzen (10) einschließt, die sich in entgegengesetzte Richtungen drehen, des möglichen Gipses, der an den Innenseiten der Kartons haften bleibt,einschließt, wobei der gesamte Werkstoff in das Sammel- und Sortierelement (4) fällt, wobei die Löcher des Gehäuses (6) den Durchtritt des Gipses ermöglichen, um im unteren Teil der Maschine gesammelt zu werden, während der Karton von der Schnecke (5) aufgenommen und zu einer der Seiten des Gehäuses (6) befördert wird, wo er gesammelt werden kann.

## Revendications

1. Machine pour le recyclage de plaques de plâtre laminées ou PPL, construite autour d'un châssis (1) qui supporte,
dans un premier niveau vertical, un élément d'alimentation et de broyage (2) actionné par pression et un élément de nettoyage (3) et, dans un deuxième niveau, situé en aval du premier niveau, un élément de collecte et de tri (4), où :
l'élément d'alimentation et de broyage (2) comprend un groupe d'au moins deux cylindres métalliques (8) disposés verticalement parallèles l'un au-dessus de l'autre, de manière à laisser suffisamment d'espace pour l'alimentation d'un panneau PPL entre les deux cylindres, qui tournent dans des directions opposées autour de leurs axes longitudinaux respectifs,
ainsi que des moyens de brossage ou de nettoyage qui comprennent un ensemble de cylindres (10) essentiellement disposés parallèles aux cylindres (8) et également séparés verticalement les uns des autres, lesdits cylindres (10) tournant dans des directions opposées et lesdits cylindres (10) incluant des moyens de fraisage, de brossage ou de polissage le long de leur surface de roulement et **caractérisée en ce que**
l'élément de nettoyage (3) comprend un câble (9) disposé longitudinalement derrière les cylindres (8), approximativement à la hauteur de la zone centrale de l'espace laissé entre les cylindres (8), qui est fermement relié au châssis (1) sous tension,
l'élément de collecte et de tri (4) comprend une vis sans fin (5) entièrement ou partiellement logée dans un boîtier perforé (6) ou deux vis sans fin qui se déplacent dans des directions relatives opposées, de sorte que le gypse passe à travers les trous (7) du boîtier vers l'extérieur de la machine, en raison de la gravité, tandis que le carton est transporté par la vis sans fin ou les vis sans fin (5) vers l'un des côtés du boîtier (6).

2. Machine pour le recyclage de plaques de plâtre laminées ou PPL selon la revendication 1, **caractérisée en ce que** l'élément de collecte et de tri (4) est incliné vers le bas en formant un angle avec la surface où repose la machine.

3. Machine pour le recyclage de plaques de plâtre laminées ou PPL selon la revendication 1, **caractérisée en ce que** le mouvement de la vis sans fin (5) transporte le carton vers l'un des côtés du boîtier (6) qui coïncide avec sa section la plus haute, et à partir de ce point, le carton est transporté à l'extérieur de la machine.

4. Machine pour le recyclage de plaques de plâtre laminées ou PPL selon la revendication 1, **caractérisée en ce que** les trous (7) du boîtier (6) sont situés au moins sur une paroi latérale et au moins sur une paroi arrière du boîtier.

5. Machine pour le recyclage de plaques de plâtre laminées ou PPL selon la revendication 1, **caractérisée en ce que** les moyens de fraisage, de polissage ou de brossage comprennent des poils qui sont disposés verticalement sur la surface de roulement des cylindres (10).

6. Machine pour le recyclage de plaques de plâtre laminées ou PPL selon la revendication 1, **caractérisée en ce que**, pour alimenter la machine avec tout type de PPL, un ensemble de moyens appropriés sont disponibles pour régler la séparation entre les cylindres (8) permettant aux cylindres (8) de se rapprocher ou de se séparer les uns des autres.

7. Machine pour le recyclage de plaques de plâtre laminées ou PPL selon la revendication 1, **caractérisée en ce que** les cylindres (8) tournent dans des directions opposées autour de leurs axes longitudinaux respectifs au moyen de moteurs associés à des mécanismes d'entraînement.

8. Machine pour le recyclage de plaques de plâtre laminées ou PPL selon la revendication 1, **caractérisée en ce que** les cylindres (8) sont utilisés, d'une part, pour alimenter la machine lorsqu'une PPL est introduite entre eux, en raison de l'effet de traînement généré par leur contre-rotation et, d'autre part, comme élément de broyage, en exerçant une force de compression verticale sur les deux surfaces de la PPL alimentée.

9. Utilisation d'une machine selon l'une quelconque des revendications précédentes pour le recyclage sur place de plaques de plâtre laminées ou de PPL sur le chantier, permettant le recyclage des restes de plaques de plâtre laminées sur le site de construction.

10. Procédé de séparation en leurs composants individuels de plaques de plâtre laminées ou PPL par l'utilisation d'une machine selon l'une quelconque des revendications 1 à 8, **caractérisé en ce qu'**il comporte les étapes d'alimentation de la plaque de plâtre laminée dans la machine à travers l'élément de broyage et d'alimentation (2), cette planche étant comprimée par les cylindres (8) jusqu'à ce qu'elle se casse ; la séparation au moyen du câble d'acier (9) de chacune des pièces de carton qui composent la PPL ; le nettoyage avec les cylindres (10), qui tournent dans des directions opposées, le gypse éventuel qui reste collé aux côtés internes des cartons, dans lequel tout le matériau tombe dans l'élément de collecte et de tri (4), où les trous du boîtier (6) permettent au gypse de passer à travers pour être collecté dans la partie inférieure de la machine, tandis que le carton est absorbé par la vis sans fin (5) et transporté vers l'un des côtés du boîtier (6), où il peut être collecté.
